# EUROPEAN PATENT APPLICATION

(11) **EP 4 826 668 A1**
(43) Date of publication of application: **21.10.2026**
(21) Application number: 24903481.0
(22) Date of filing: 25.11.2024
(51) Int. Cl.: G06T 19/20

(54) **INFORMATION PROCESSING APPARATUS, INFORMATION PROCESSING METHOD, AND PROGRAM**

(30) Priority: 15.12.2023 JP 2023212401
(71) Applicant: Sony Group Corporation, Tokyo 108-0075 (JP)
(72) Inventor: KATO Takaaki, Atsugi-shi, Kanagawa 243-0014 (JP); ABE Shinichiro, Atsugi-shi, Kanagawa 243-0014 (JP)
(74) Representative: MFG Patentanwälte Meyer-Wildhagen Meggle-Freund Gerhard PartG mbB
(86) International application number: PCT/JP2024/041651
(87) International publication number: WO 2025/126822

(57) **Abstract**

The present technology relates to an information processing device, an information processing method, and a program that enable a 3D map for VPS to be edited easily and accurately. The information processing device edits an editing target region in a 3D model in a virtual space and updates the 3D map based on the 3D model in which the editing target region is edited. The present technology can be applied to, for example, an AR providing system or the like that provides an AR event using the 3D map for VPS.

## Description

### Technical Field

The present technology relates to an information processing device, an information processing method, and a program, and particularly relates to an information processing device, an information processing method, and a program that enable a 3D map for visual positioning service (VPS) to be edited easily and accurately.

### Background Art

Examples of technologies capable of significantly upgrading the functionality of cross reality (XR) such as augmented reality (AR) include VPS. VPS is a technology for measuring a position from an image.

For example, it is assumed that a 3D map for VPS (hereinafter referred to as a VPS map) is created in advance (for example, one month in advance) for an upcoming AR event in response to a request from the event organizer. However, when decorations for the AR event are put up several days before the AR event, the content of the created VPS map is different from reality, and thus there is no other way but to create a VPS map again from the beginning.

Note that, as for a 2D image, technologies for partial replacement and generation have already been proposed (see NPL 1).

### Citation List

### Patent Literature

NPL 1: Johannes L. Schonberger, Jan-Michael Frahm, "Structure-from-Motion Revisited", [online], from June 26th to July 1st 2016, CVPR (Computer Vision and Pattern Recognition) 2016 in Las Vegas, [retrieved on October 25, 2023], Internet <https://openaccess.thecvf.com/content_cvpr_2016/papers/Schonberger_St ructure-From-Motion_Revisited_CVPR_2016_paper.pdf>

### Summary

### Technical Problem

It takes time and effort to create the VPS map again from the beginning as described above. Therefore, there has been a need for a technology for easily and accurately editing the VPS map.

The present technology has been made in view of such circumstances, and an object thereof is to make it possible to easily and accurately edit a 3D map for VPS.

### Solution to Problem

An information processing device according to an aspect of the present technology includes a 3D model editing unit configured to edit an editing target region in a 3D model in a virtual space, and a map update unit configured to update a 3D map based on the 3D model in which the editing target region is edited.

According to an aspect of the present technology, an editing target region in a 3D model in a virtual space is edited, and a 3D map is updated based on the 3D model in which the editing target region is edited.

### Brief Description of Drawings

[Fig. 1]

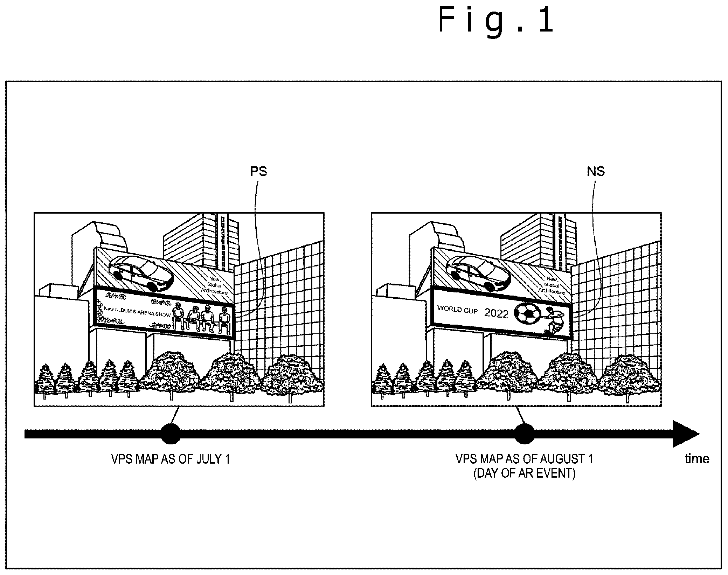

   Fig. 1 is a diagram illustrating a timing of creating a VPS map in the related art.
[Fig. 2]

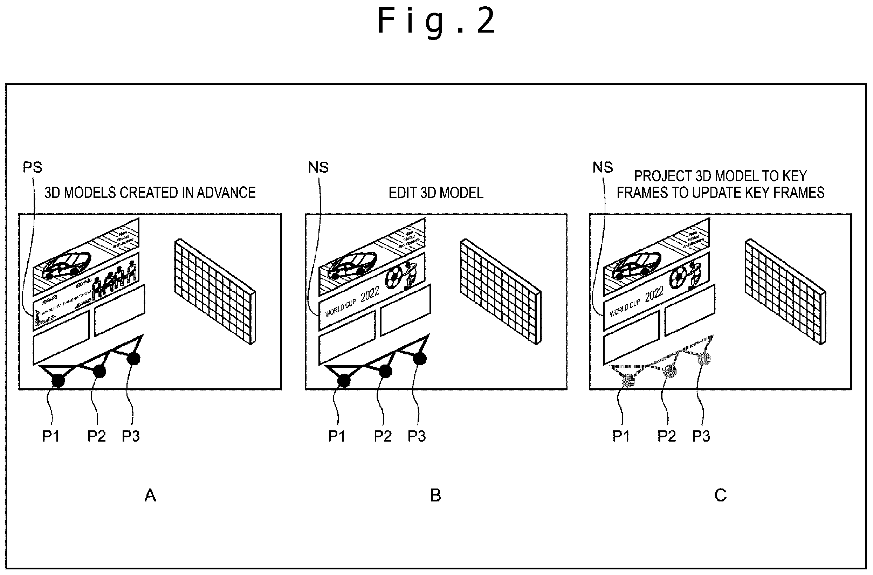

   Fig. 2 is a diagram illustrating an example of editing a 3D model in the present technology.
[Fig. 3]

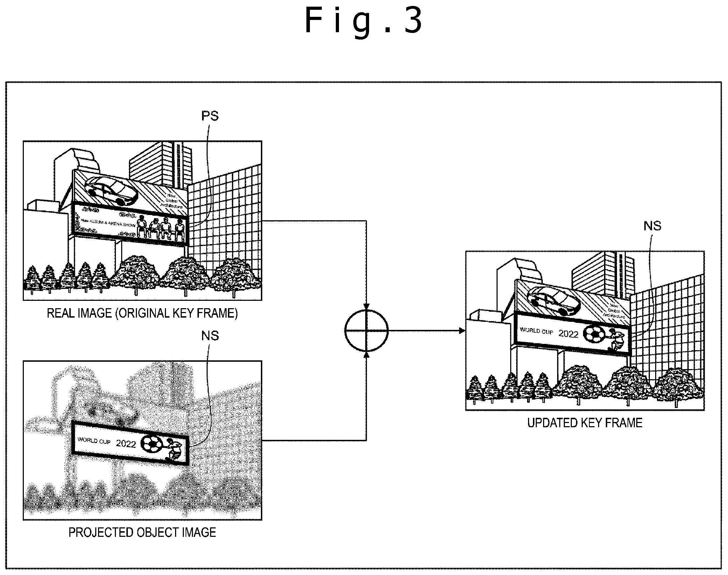

   Fig. 3 is a diagram illustrating an example of merging a projected object image and a key frame.
[Fig. 4]

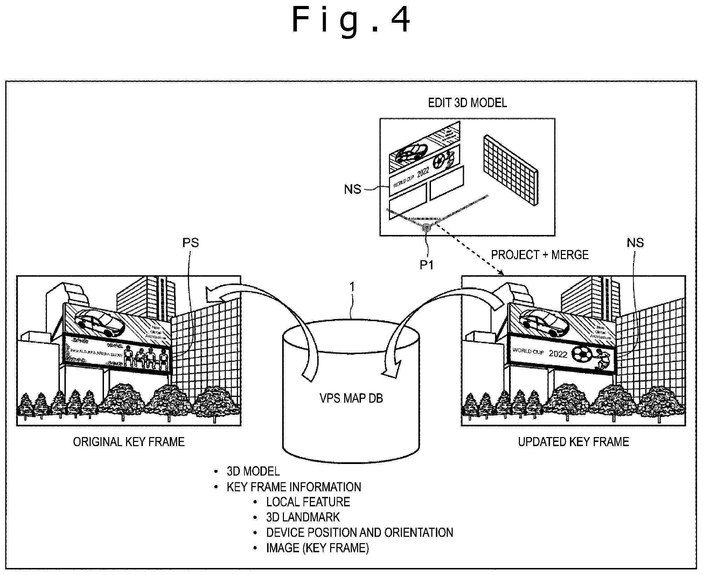

   Fig. 4 is a diagram illustrating an example of updating a VPS map.
[Fig. 5]

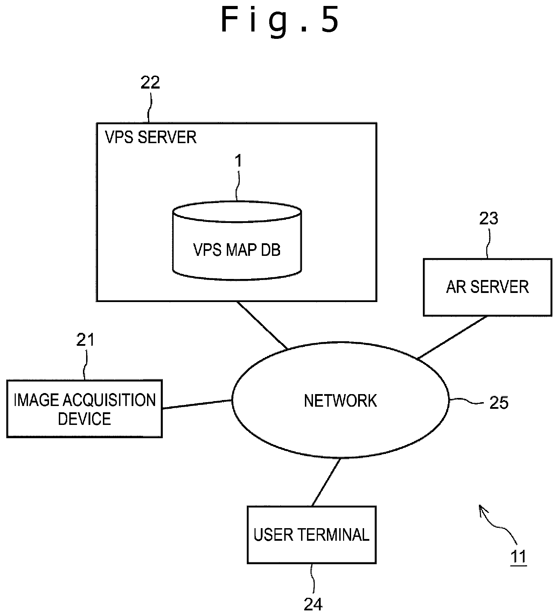

   Fig. 5 is a block diagram illustrating a configuration example of an AR providing system according to an embodiment of the present technology.
[Fig. 6]

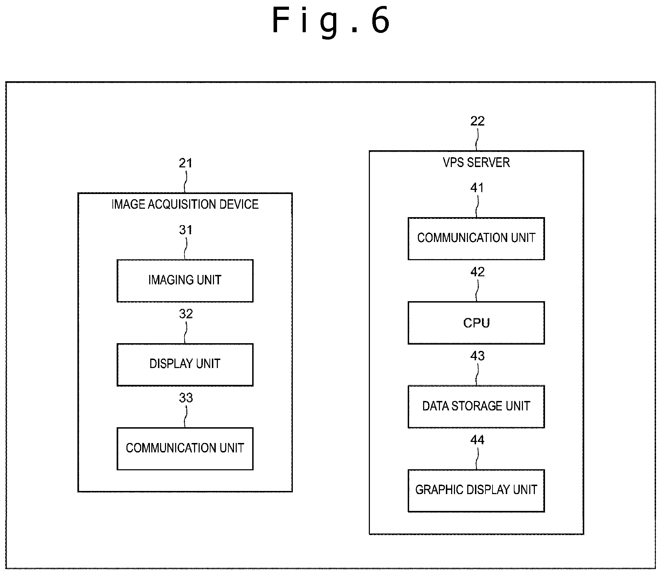

   Fig. 6 is a block diagram illustrating an example of a hardware configuration of an image acquisition device and a VPS server in Fig. 5.
[Fig. 7]

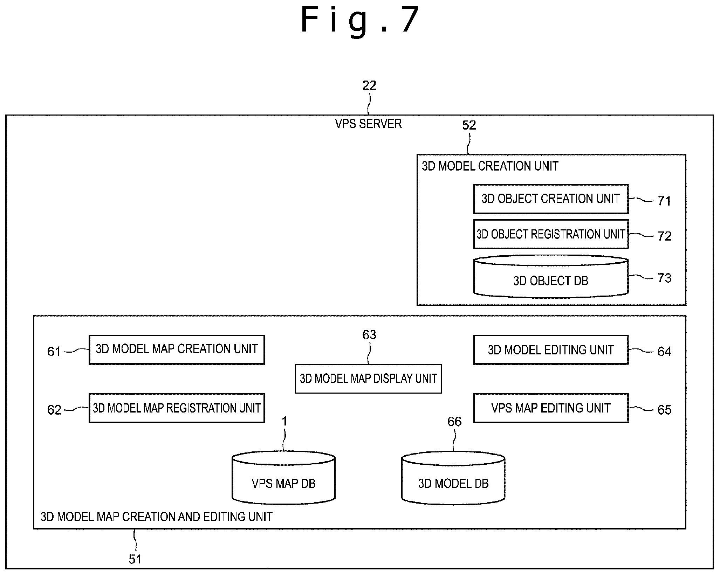

   Fig. 7 is a block diagram illustrating an example of a functional configuration of the VPS server.
[Fig. 8]

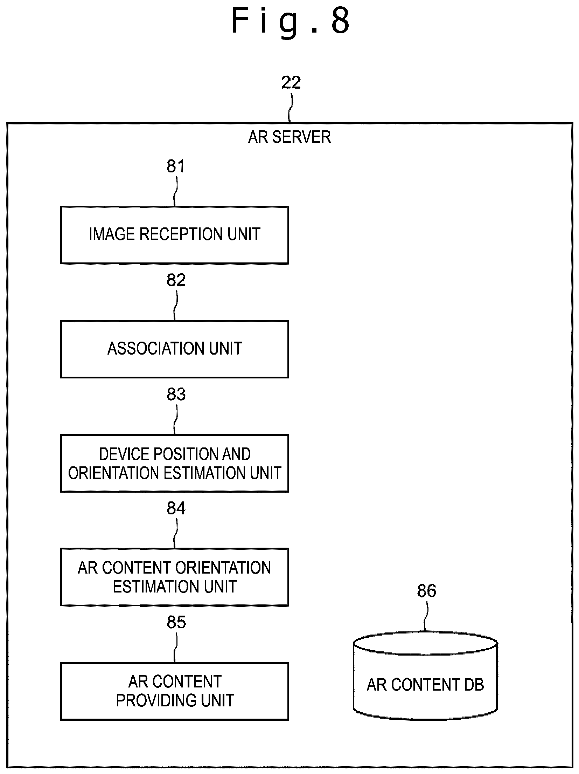

   Fig. 8 is a block diagram illustrating an example of a functional configuration of an AR server.
[Fig. 9]

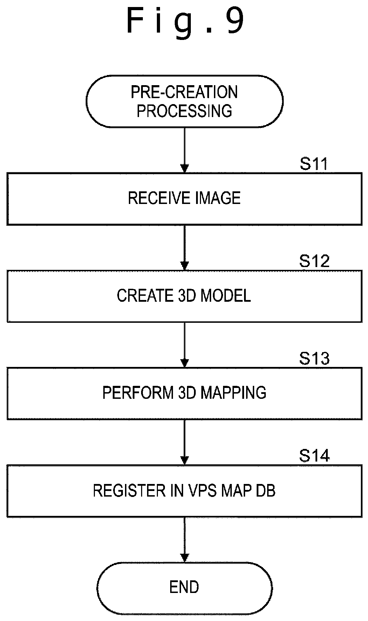

   Fig. 9 is a flowchart for describing pre-creation processing of the VPS server.
[Fig. 10]

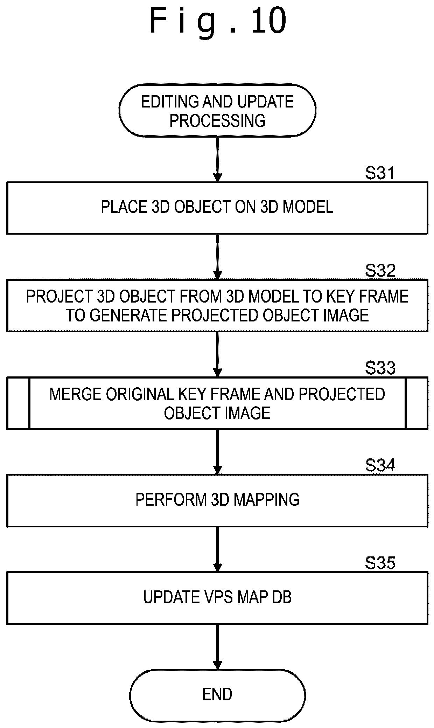

   Fig. 10 is a flowchart for describing editing and update processing of the VPS server.
[Fig. 11]

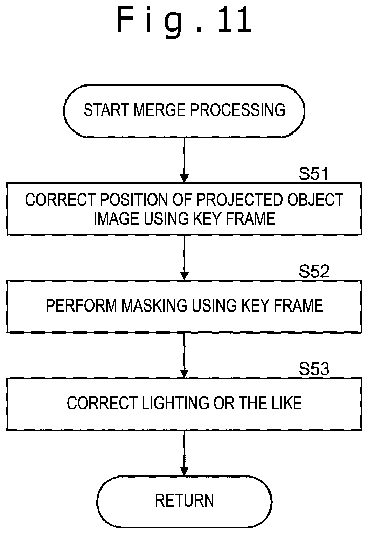

   Fig. 11 is a flowchart for describing an example of merge processing in step S33 in Fig. 10.
[Fig. 12]

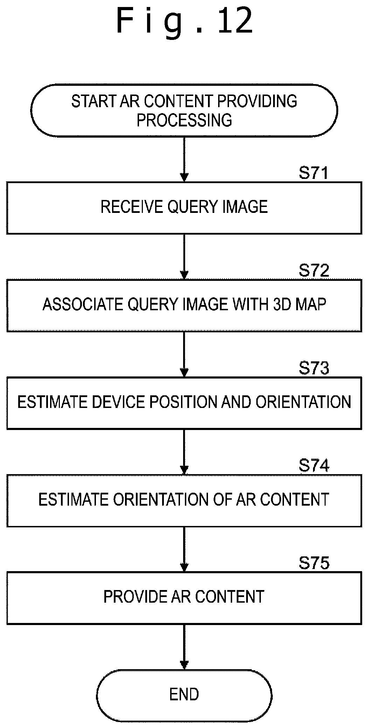

   Fig. 12 is a flowchart for describing AR content providing processing of an AR server 23.
[Fig. 13]

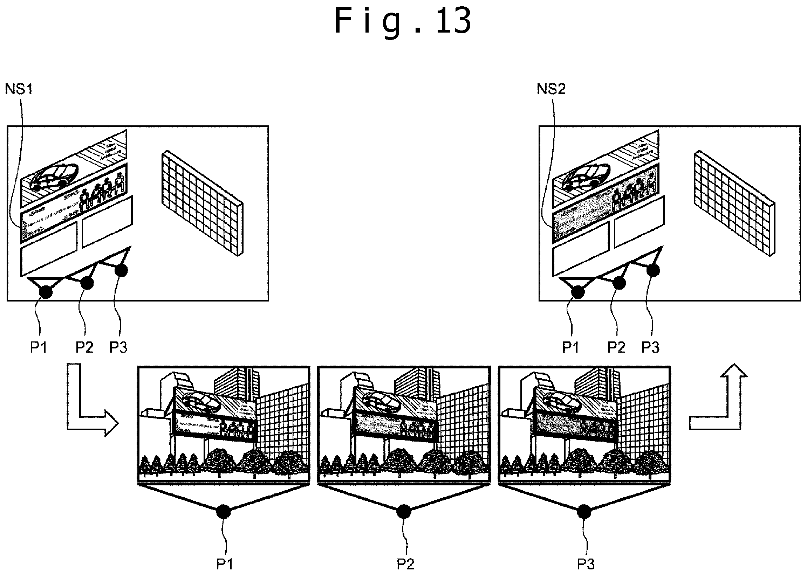

   Fig. 13 is a diagram illustrating an example of re-editing and re-projecting a 3D model.
[Fig. 14]

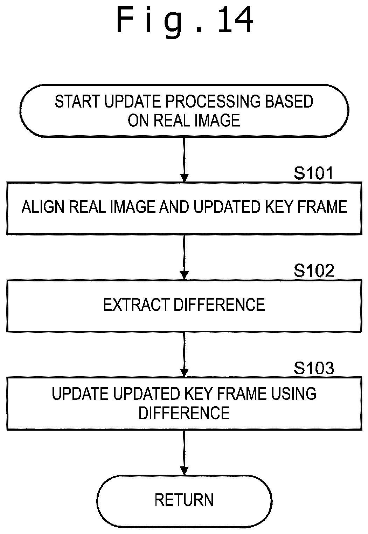

   Fig. 14 is a flowchart for describing processing of updating an updated key frame based on a real image.
[Fig. 15]

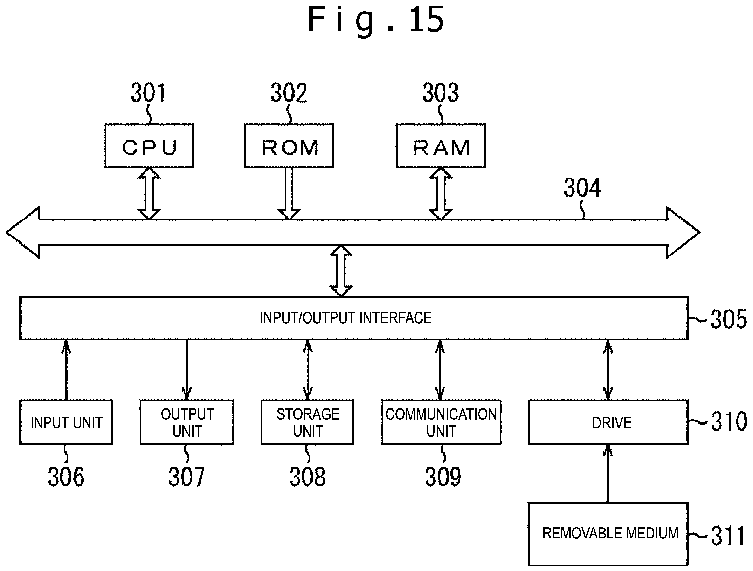

   Fig. 15 is a block diagram illustrating a configuration example of a computer.

### Description of Embodiments

Hereinafter, embodiments for implementing the present technology will be described. The description will be made in the following order.
1. Overview of Present Technology
2. Configuration
3. Operation
4. Modification Examples
5. Others

### 1. Overview of Present Technology

### Related Art

Fig. 1 is a diagram illustrating a timing of creating a VPS map in the related art.

For example, it is assumed that when a VPS map needs to be created on July 1 for an AR event on August 1, the VPS map created on July 1 includes a 3D model created based on an image in a state in which a sign PS is installed.

It is assumed that decorations for the AR event on August 1 are then put up on July 25 in the real space, and the sign PS is changed to a sign NS.

In this case, the 3D map created on July 1 includes information on the past state in which the sign PS is installed, unlike the real state in which the sign NS is installed.

In such a situation, in the related art, a VPS map of the real state in which the sign NS is installed needs to be created again from the beginning during the period from July 25 to August 1, which is the day of the AR event, and this requires time and effort.

### Editing of 3D Model of Present Technology

Fig. 2 is a diagram illustrating an example of editing a 3D model in the present technology.

In A of Fig. 2, 3D models created in advance in a virtual space are illustrated. In B of Fig. 2, a 3D model edited in the virtual space is illustrated. In C of Fig. 2, a 3D model projected on key frames in the virtual space is illustrated.

In Fig. 2, the bases of triangles represent images captured from respective vertex positions P1 to P3 of the triangles at view angles indicated by the vertex angles of the triangles. The same applies to the following diagrams. These images are referred to as key frames that are frames necessary (that is, serving as keys) for recording information of the 3D models as a VPS map, and the VPS map is created from key frame information acquired from the 3D models based on the key frames.

First, as illustrated in A of Fig. 2, the 3D models of the sign PS, a building, and the like are created in advance in the virtual space based on images captured on July 1 at the position P1 to the position P3. The VPS map is created using, as the key frame information, information such as these images themselves (key frames), the positions (for example, the position P1 to the position P3) and orientations of a camera when the images are captured, and features extracted from the images.

Next, as illustrated in B of Fig. 2, editing is performed in the virtual space to replace, among the 3D models created in advance, a region of the sign PS, which is an editing target region, with, for example, a 3D object (editing object) of the sign NS separately created on or after July 25. A portion of the 3D model is referred to as a 3D object. The virtual space to be edited is the virtual space in which the 3D models are created, but may be a virtual space different from the virtual space in which the 3D models are created.

Then, as illustrated in C of Fig. 2, the 3D object of the sign NS is projected from the 3D model after the editing onto the key frames of the position P1 to the position P3, and projected object images are generated.

The generated projected object images are merged with the key frames, and the VPS map is updated based on the merged key frames.

### Merging of Projected Object Image and Key Frame

Fig. 3 is a diagram illustrating an example of merging a projected object image and a key frame.

On the left side of Fig. 3, the key frame, which is a captured image, and the projected object image described with reference to Fig. 2 are illustrated. Since the projected object image is an image on which 3D models including a 3D object edited in a virtual space are projected, the projected object image is different from the actually captured image, for example, there is an empty space between the 3D models.

In Fig. 3, the cross in the middle represents merging of the key frame and the projected object image illustrated on the left side.

For example, a portion other than the sign PS in the key frame and a portion of the sign NS in the projected object image are merged. As a result, an updated key frame in which the sign PS is updated to the sign NS is generated.

### Update of VPS Map

Fig. 4 is a diagram illustrating an example of a VPS map.

In the middle of Fig. 4, a VPS map DB 1 is illustrated.

In the VPS map DB 1, a created 3D model and a VPS map including key frame information of the 3D model are registered.

The key frame information includes information of an entirety or part of an image encoded for establishing inter-image correspondence, a three-dimensional measurement result related to the image, a device position and orientation, and the image (key frame). Examples of the information of the entirety or part of an image encoded for establishing inter-image correspondence include a local feature. Examples of the three-dimensional measurement result related to the image include a 3D landmark.

The local feature is a set of a characteristic corner point and a hash value. The 3D landmark is information indicating where the corner point is in the three-dimensional space. The device position and orientation are information indicating the position and orientation of the device that has captured the key frame. The key frame is constituted by a captured image that is actually captured, and the like. Note that, at a position where there is no captured image, a projected image in the virtual space, a merged image of a captured image and a projected image in the surroundings, or the like serves as the key frame.

Fig. 4 illustrates, on the right side, an updated key frame generated by editing the 3D model and merging the key frame and a projected object image on which (the 3D object of) the edited 3D model is projected.

The key frame registered in advance in the VPS map DB 1 is replaced with the updated key frame, the key frame information is updated based on the edited 3D model and the updated key frame, and the VPS map is updated.

As described above, in the present technology, the 3D model created from the plurality of key frames having different viewpoints (that is, positions and orientations) is edited in the virtual space, and the projected object images on which the 3D model is projected are merged with the key frames, so that the key frame information is updated and the VPS map is updated.

Therefore, according to the present technology, it is possible to easily and accurately edit the VPS map DB 1.

### 2. Configuration

### System Configuration

Fig. 5 is a diagram illustrating a configuration example of an AR providing system according to an embodiment of the present technology.

In Fig. 5, an AR providing system 11 is a system that provides AR content to a user terminal 24 possessed by a user using a VPS map, thereby providing an AR event using the AR content.

The AR providing system 11 includes an image acquisition device 21, a VPS server 22, an AR server 23, and the user terminal 24.

The image acquisition device 21, the VPS server 22, the AR server 23, and the user terminal 24 are connected to a network 25. The image acquisition device 21, the VPS server 22, the AR server 23, and the user terminal 24 can communicate with each other via the network 25.

The image acquisition device 21 is constituted by a smartphone, a digital camera, or the like. The image acquisition device 21 acquires a plurality of pieces of actual image data of a building and the like and transmits the plurality of pieces of acquired image data to the VPS server 22 in order to create a VPS model.

The VPS server 22 is a server including the VPS map DB 1. The VPS server 22 creates the VPS model in a virtual space using images of the pieces of image data transmitted from the image acquisition device 21, and registers a VPS map including the VPS model and key frame information thereof in the VPS map DB 1.

The VPS server 22 edits the VPS model in the virtual space using the images transmitted from the image acquisition device 21, and updates the VPS map (the VPS model and the key frame information thereof) registered in the VPS map DB 1, as necessary.

The AR server 23 searches the VPS map DB 1 of the VPS server 22 using an image of image data transmitted from the user terminal 24 as a query image, and associates the query image with a VPS map. The AR server 23 estimates (localizes) the position and orientation of the device (user terminal 24) based on the VPS map associated with the query image. Further, the AR server 23 estimates, based on the estimated position (orientation) of the device, the orientation of registered AR content, that is, how the AR content is viewed from the device to determine how to present the AR content, and provides (transmits) the AR content to the user terminal 24.

The user terminal 24 is constituted by a smartphone, a head-mounted display, or the like. The user terminal 24 acquires image data by capturing an image at a position targeted for an AR event in the real space, and transmits the acquired image data to the AR server 23. The user terminal 24 displays the AR content transmitted from the AR server 23 such that the AR content is superimposed on the actual image captured by a camera or the like included in the user terminal 24. This allows the user to enjoy the AR event.

Although Fig. 5 illustrates an example in which the VPS server 22 and the AR server 23 are separately configured, these servers may be configured as one server.

### Hardware Configuration

Fig. 6 is a block diagram illustrating an example of a hardware configuration of the image acquisition device 21 and the VPS server 22 in Fig. 5.

The image acquisition device 21 in Fig. 6 includes an imaging unit 31, a display unit 32, and a communication unit 33.

The imaging unit 31 captures an image of a subject for which a 3D model is to be created, and generates an image signal. The imaging unit 31 performs predetermined signal processing on the generated image signal, and outputs the image data after the signal processing to the display unit 32 and the communication unit 33.

The display unit 32 is constituted by a liquid crystal display (LCD), or the like. The display unit 32 displays an image corresponding to the image data supplied from the imaging unit 31.

The communication unit 33 communicates with other devices via the network 25. For example, the communication unit 33 transmits the image data supplied from the imaging unit 31 to the VPS server 22 via the network 25.

The VPS server 22 includes a communication unit 41, a CPU 42, a data storage unit 43, and a graphic display unit 44.

The communication unit 41 communicates with other devices via the network 25. For example, the communication unit 41 exchanges data with the image acquisition device 21 and the AR server 23. For example, the communication unit 41 receives image data transmitted from the image acquisition device 21 and outputs the image data to the CPU 42 and the data storage unit 43.

The CPU 42 controls each unit of the VPS server 22 so as to function as a VPS server that performs creation and editing of a VPS model, creation and management of a VPS map, and the like.

The data storage unit 43 stores programs, data, and image data. For example, the data storage unit 43 includes the VPS map DB 1 of Fig. 5.

The graphic display unit 44 displays an image corresponding to the image data stored in the data storage unit 43.

Since the AR server 23 is also configured in the same manner as the VPS server 22 of Fig. 6, the AR server 23 will be described below using the configuration of the VPS server 22 of Fig. 6.

### Functional Configuration of VPS Server

Fig. 7 is a block diagram illustrating an example of a functional configuration of the VPS server 22.

Each function of Fig. 7 is implemented by the CPU 42 executing a program stored in the data storage unit 43 or the like.

The VPS server 22 of Fig. 7 includes a 3D model map creation and editing unit 51 and a 3D model creation unit 52.

The 3D model map creation and editing unit 51 creates and stores a 3D model and a VPS map. The 3D model map creation and editing unit 51 edits and updates the stored 3D model and VPS map.

The 3D model map creation and editing unit 51 includes the VPS map DB 1 of Fig. 5, a 3D model map creation unit 61, a 3D model map registration unit 62, a 3D model map display unit 63, a 3D model editing unit 64, a VPS map editing unit 65, and a 3D model DB 66.

The 3D model map creation unit 61 acquires images of a plurality of pieces of image data transmitted from the image acquisition device 21, and creates a 3D model using the plurality of acquired images as key frames. The 3D model map creation unit 61 performs 3D mapping based on the plurality of key frames. The 3D mapping refers to creating the VPS map including the 3D model and key frame information. The 3D model map creation unit 61 outputs the VPS map to the 3D model map registration unit 62.

The 3D model map registration unit 62 registers the 3D model in the 3D model DB 66. The 3D model map registration unit 62 registers the VPS map including the 3D model and the key frame information in the VPS map DB 1.

The 3D model map display unit 63 displays the 3D model and the VPS map registered in the 3D model DB 66 and the VPS map DB 1. As necessary, the 3D model map display unit 63 also displays the 3D model being created by the 3D model map creation unit 61 or being edited by the 3D model editing unit 64 and the VPS map being edited by the VPS map editing unit 65.

The 3D model editing unit 64 edits, in the virtual space, the 3D model of the VPS map registered in the VPS map DB 1. That is, the 3D model editing unit 64 reads out, in the virtual space, the 3D model of the VPS map registered in the VPS map DB1, and performs editing processing of the 3D model. The editing processing is, for example, processing of identifying an editing target region on the 3D model, identifying, as an editing object, a 3D object created by the 3D model creation unit 52 such as a sign, and placing the editing object in the editing target region.

The 3D model editing unit 64 projects the 3D object from the edited 3D model onto the key frames to generate projected object images. The 3D model editing unit 64 merges the key frames of the VPS map registered in the VPS map DB 1 with the projected object images to generate updated key frames. The 3D model editing unit 64 outputs the edited 3D model and the updated key frames to the VPS map editing unit 65.

The VPS map editing unit 65 performs 3D mapping using the updated key frames and the 3D model, and updates the VPS map of the VPS map DB 1.

The 3D model created by the 3D model map creation unit 61 and the 3D model edited by the 3D model editing unit 64 are registered in the 3D model DB 66.

The 3D model creation unit 52 includes a 3D object creation unit 71, a 3D object registration unit 72, and a 3D object DB 73.

The 3D object creation unit 71 acquires images of a plurality of pieces of image data transmitted from the image acquisition device 21, and creates a 3D object using the plurality of acquired images. The 3D object creation unit 71 outputs the created 3D object to the 3D object registration unit 72.

The 3D object registration unit 72 registers the 3D object created by the 3D object creation unit 71 in the 3D object DB 73.

The 3D object created by the 3D object creation unit 71 is registered in the 3D object DB 73.

### Functional Configuration of AR Server

Fig. 8 is a block diagram illustrating an example of a functional configuration of the AR server.

Each function of Fig. 8 is implemented by the CPU 42 executing a program stored in data storage unit 43 or the like.

The AR server 23 of Fig. 8 includes an image reception unit 81, an association unit 82, a device position and orientation estimation unit 83, an AR content orientation estimation unit 84, an AR content providing unit 85, and an AR content DB 86.

The image reception unit 81 receives an image of image data transmitted from the user terminal 24 as a query image, and outputs the received query image to the association unit 82.

The association unit 82 searches the VPS map DB 1 of the VPS server 22 using the query image, associates the query image with a VPS map, and outputs information of the VPS map associated with the query image to the device position and orientation estimation unit 83.

The device position and orientation estimation unit 83 estimates the position and orientation of the device (user terminal 24) based on the VPS map associated with the query image, and outputs information indicating the estimated position and orientation of the user terminal 24 to the AR content orientation estimation unit 84.

The AR content orientation estimation unit 84 estimates the orientation of AR content registered in the AR content DB 86, based on the position (orientation) of the device supplied from the device position and orientation estimation unit 83.

The AR content providing unit 85 provides (transmits) the AR content at the orientation estimated by the AR content orientation estimation unit 84 to the user terminal 24.

### 3. Operation

### Pre-Creation Processing of VPS Server

Fig. 9 is a flowchart for describing pre-creation processing of the VPS server 22.

The image acquisition device 21 acquires a plurality of pieces of image data of an actual building and the like in order to generate a VPS model, and transmits the acquired image data to the VPS server 22.

In step S11, the 3D model map creation unit 61 receives images of the plurality of pieces of image data transmitted from the image acquisition device 21.

In step S12, the 3D model map creation unit 61 creates a 3D model using the images of the plurality of pieces of image data received in step S11 as key frames.

In step S13, the 3D model map creation unit 61 performs 3D mapping using the plurality of key frames and the 3D model, and creates a VPS map including the 3D model and key frame information. The 3D model map creation unit 61 outputs the VPS map to the 3D model map registration unit 62.

In step S14, the 3D model map registration unit 62 registers the VPS map including the 3D model and the key frame information in the VPS map DB 1.

### Editing and Update Processing of VPS Server

Fig. 10 is a flowchart for describing editing and update processing of the VPS server 22.

A 3D model of a building or the like targeted for an upcoming AR event is created as described above with reference to Fig. 9, 3D mapping is performed in advance, and a VPS map is registered in the VPS map DB 1.

In Fig. 10, an example will be described in which when a sign of a building is actually replaced with a sign for the AR event, a 3D object of the sign for the AR event is created and placed instead of the sign of the building in a virtual space.

First, the 3D object creation unit 71 acquires images of a plurality of pieces of image data transmitted from the image acquisition device 21, and creates the 3D object of the sign for the AR event using the plurality of acquired images. The 3D object may be created in the virtual space without using the image data. The 3D object registration unit 73 registers the 3D object created by the 3D object creation unit 71 in the 3D object DB 73.

Through the above processing, the 3D object of the sign for the AR event is registered in the 3D object DB 73.

In step S31, the 3D model editing unit 64 reads out, in the virtual space, the 3D model of the VPS map registered in the VPS map DB1, and performs editing processing of placing the 3D object created by the 3D object creation unit 71 on the 3D model.

That is, the 3D model editing unit 64 reads out, in the virtual space, the 3D model of the VPS map registered in the VPS map DB 1, identifies an editing target region on the 3D model, identifies, as an editing object, the 3D object created by the 3D object creation unit 71 such as a sign, places the editing object in the editing target region, and performs editing. As a method of identifying the editing target region, the editing target region may be identified by being specified by the creator using an operation unit (not illustrated) of the VPS server 22 or specified by character information or the like.

In step S32, the 3D model editing unit 64 projects the 3D object from the edited 3D model onto key frames to generate projected object images.

In step S33, the 3D model editing unit 64 merges the key frames of the VPS map registered in the VPS map DB 1 and the projected object images to generate updated key frames. The merge processing will be described in detail below with reference to Fig. 11. The 3D model editing unit 64 outputs the edited 3D model and the updated key frames to the VPS map editing unit 65.

In step S34, the VPS map editing unit 65 reconstructs the VPS map by performing 3D mapping based on the updated key frames.

In step S35, the VPS map editing unit 65 updates the VPS map in the VPS map DB 1 with the reconstructed VPS map.

As described above, the 3D model is created in advance, the 3D object is created only for an actually changed portion, and the VPS map is reconstructed and updated using the 3D object. Accordingly, when there is no time immediately before the AR event, the VPS map can be easily updated without taking time and effort.

### Merge Processing of VPS Server

Fig. 11 is a flowchart for describing an example of the merge processing in step S33 of Fig. 10.

In step S51, the 3D model editing unit 64 corrects the positions of the projected object images with reference to the key frames, which are real images.

In step S52, the 3D model editing unit 64 merges the key frames and the projected object images using the key frames as masks, and generates updated key frames. That is, in the updated key frames, the projected object images are used for a portion of the editing object (for example, the sign), and the key frames are used for a portion other than the editing object.

In step S53, the 3D model editing unit 64 corrects the shape, lighting, and/or the like of the portion of the editing object in the updated key frames. Thus, the updated key frames in which only the portion of the editing object is updated are completed. By correcting the shape and/or lighting, it is possible to make fine adjustment such that the shape and/or lighting of the editing object in the projected object images appears appropriate. For example, the shape and/or lighting of the editing object is matched to the actual appearance.

The merge processing in Fig. 11 may be automatically performed by a generative AI by inputting two images, that is, the key frame and the projected object image, to the generative AI. At this time, editing content (character information) may be input, and supplementary information for the editing content may be provided. In this case, the editing target region of the key frame and the editing object are identified according to the character information, and editing is performed.

### AR Content Providing Processing of AR Server

Fig. 12 is a flowchart for describing AR content providing processing of the AR server 23.

The user terminal 24 acquires image data of a position targeted for an AR event in the real space, and transmits the acquired image data to the AR server 23.

In step S71, the image reception unit 81 receives an image of the image data transmitted from the user terminal 24 as a query image, and outputs the received query image to the association unit 82.

In step S72, the association unit 82 searches the VPS map DB 1 of the VPS server 22 using the query image, associates the query image with a VPS map, and outputs information of the VPS map associated with the query image to the device position and orientation estimation unit 83.

In step S73, the device position and orientation estimation unit 83 estimates the position and orientation of the device (user terminal 24) based on the VPS map associated with the query image, and outputs information indicating the estimated position and orientation of the user terminal 24 to the AR content orientation estimation unit 84.

In step S74, the AR content orientation estimation unit 84 estimates the orientation of AR content registered in the AR content DB 86 based on the estimated position (orientation) of the device, and determines how to present the AR content.

In step S75, the AR content providing unit 85 provides (transmits) the AR content at the orientation estimated by the AR content orientation estimation unit 84 to the user terminal 24.

### 4. Modifications

In the above description, an example of performing the editing for replacing the sign with the new sign has been described, but editing for replacing a building being constructed with a completed building may be performed, or editing for placing trees or flowers around a building (a place where there is nothing originally) may be performed. Further, editing for replacing trees without illumination with illuminated trees may be performed, or editing for replacing fresh green trees with autumn-colored trees may be performed.

In addition, for example, by performing editing processing of re-illuminating, in a virtual space, a 3D model created based on an image captured during the daytime, it is possible to easily create a key frame for, for example, nighttime or the like.

Further, if the physical property value (material value) and the like of an object to be 3D-modeled in an image are simultaneously acquired when an original 3D model is created, more precise editing becomes possible. The physical property value is a value indicating, for example, whether the material is transparent glass, reflective material like metal, or material like paper or wood.

In the above description, an example of replacing the 3D object (for example, the sign) has been described as editing of the 3D model, but editing for adding or deleting the 3D object can also be performed. For example, a masked region can be automatically set on a key frame, and a portion of a 3D model can be deleted based on the masked region.

The above-described method of replacing the 3D object is an example, and the present technology is not limited thereto. For example, by placing a 3D object in a virtual space, and performing machine learning such as deep learning using a generative model to which the foreground and the background are input, replacement of the 3D object and update of a VPS map may be performed.

Furthermore, in the above description, an example in which the merge processing of Fig. 11 is performed by the generative AI has been described, but for example, by inputting a key frame, a replacement 3D object (if necessary), and editing content (character information) of a 3D model to a generative AI, the generative AI may automatically perform editing processing (replacement, addition, and deletion) of the 3D model according to the character information, and further perform update processing of a VPS map. That is, the editing and update processing of Fig. 10 may be performed by a generative AI.

As an example of the character information when the generative AI described above performs the merge processing or 3D model editing processing, for example, a deletion target region is identified according to character information such as "the sign has been removed", and editing is performed. In addition, by inputting character information obtained by combining a physical property value acquired from the above-described key frame information, such as "the placed 3D object is treated as a tree", the physical property value can be used for editing.

More ultimately, an editing target region of a key frame and an editing object may be identified by inputting the key frame and the editing object to an editing AI without inputting character information, and replacement processing may be automatically performed by the editing AI.

### Re-Editing and Re-Projection of 3D Model

Fig. 13 is a diagram illustrating an example of re-editing and re-projecting a 3D model.

For example, from a 3D model reconstructed by placing an object NS1, the object NS1 is projected onto key frames of a position P1 to a position P3, and an updated key frame 101 of the position P1, an updated key frame 102 of the position P2, and an updated key frame 103 of the position P3 as a result of merging are generated.

When the projected results of the 3D model are merged with the key frames, the consistency of the images is lost, and thus, for example, the updated key frame 101 to the updated key frame 103 may be different in the color of the object NS1.

Therefore, the 3D model editing unit 64 compares the updated key frame 101 to the updated key frame 103 with each other to check consistency as a 3D object, re-edits the object NS1 in the 3D model so as to have consistency, and projects a re-edited object NS2 onto the key frames of the position P1 to the position P3.

As described above, by repeating processing of re-creating the 3D model based on the editing result and re-projecting the 3D model, it is possible to create a more consistent future 3D model and map information. The processing of Fig. 13 can also be automated by a generative AI or the like.

### Update of Updated Key frame Based on Real Image

Fig. 14 is a flowchart for describing processing of updating an updated key frame based on a real image.

For example, there is an updated key frame created by editing a 3D model in a virtual space, projecting the 3D model onto a key frame, and merging the 3D model with the key frame, without using an image captured in the real space.

The processing of Fig. 14 is started by transmitting an image captured in the real space from the image acquisition device 21 at a timing when the real situation catches up with the situation of a VPS map edited in the virtual space as described above.

In step S101, the 3D model editing unit 64 aligns the real image transmitted from the image acquisition device 21 with an updated key frame registered in the VPS map DB 1.

In step S102, the 3D model editing unit 64 extracts a difference between the real image and the updated key frame.

In step S103, the 3D model editing unit 64 updates the updated key frame using the extracted difference. Thereafter, the VPS map editing unit 65 performs 3D mapping based on the updated key frame, and updates the VPS map of the VPS map DB 1.

As described above, it is also possible to extract the difference and perform update again at a timing when the situation of the real space catches up with the situation edited in the virtual space. The processing of Fig. 14 can also be automated by a generative AI or the like.

Note that, in the above description, an example in which the VPS map is constructed in advance and edited in the VPS server has been described, but the present technology may be used when the user constructs the VPS map in advance and edits the VPS map. In addition, the present technology can be applied to various technologies such as estimation of a camera position in a virtual production studio and autonomous movement of a robot, for example, in addition to a case of providing an AR event using AR content.

### 5. Others

### Effects of Present Technology

As described above, in the present technology, an editing target region in a 3D model in a virtual space is edited, and a 3D map is updated based on the 3D model in which the editing target region is edited.

This makes it possible to edit the 3D map easily and accurately.

### Configuration Example of Computer

The above-described series of processing steps can be executed by hardware or software. In a case where the series of processing steps is executed by software, a program constituting the software is installed from a program recording medium to a computer embedded in dedicated hardware, a general-purpose personal computer, or the like.

Fig. 15 is a block diagram illustrating an example of a hardware configuration of a computer that executes the above-described series of processing steps by a program.

A CPU 301, a ROM 302, and a RAM 303 are connected to each other by a bus 304.

An input/output interface 305 is also connected to the bus 304. An input unit 306 including a keyboard, a mouse, and the like, and an output unit 307 including a display, a speaker, and the like are connected to the input/output interface 305. Further, a storage unit 308 including a hard disk, a nonvolatile memory, or the like, a communication unit 309 including a network interface or the like, and a drive 310 that drives a removable medium 311 are connected to the input/output interface 305.

In the computer configured as described above, for example, the CPU 301 loads a program stored in the storage unit 308 into the RAM 303 via the input/output interface 305 and the bus 304, and executes the program, thereby executing the series of processing steps described above.

The program executed by the CPU 301 is, for example, recorded on the removable medium 311, or provided via a wired or wireless transmission medium such as a local area network, the Internet, and digital broadcast, and installed in the storage unit 308.

Note that the program executed by the computer may be a program in which processing is performed in time series in the order described in the present specification, or may be a program in which processing is performed in parallel or at a necessary timing such as when a call is performed.

Note that in the present specification, the system means a set of a plurality of components (devices, modules (parts), and the like), and it does not matter whether all the components are in the same housing. Therefore, the system refers to both a plurality of devices housed in separate housings and connected via a network, and one device in which a plurality of modules are housed in one housing.

Further, the effects described in this specification are merely illustrative and not limiting, and other effects may also be provided.

The embodiments of the present technology are not limited to the above-described embodiments, and various modifications can be made without departing from the gist of the present technology.

For example, the present technology can have a configuration of cloud computing in which one function is shared and processed in cooperation by a plurality of apparatuses via a network.

Further, each step described in the above-described flowchart can be performed by one device or can be shared and executed by a plurality of devices.

Further, when a single step includes multiple processes, the multiple processes included in that single step can be executed by a single device, or can be shared and executed by a plurality of devices.

### Combination Example of Configurations

Note that the present technology may also have the following configurations.
(1) An information processing device including:
   a 3D model editing unit configured to edit an editing target region in a 3D model in a virtual space; and
   a map update unit configured to update a 3D map based on the 3D model in which the editing target region is edited.
(2) The information processing device according to (1) described above, wherein
   the map update unit updates the 3D map using the edited 3D model and an updated image updated based on the 3D model.
(3) The information processing device according to (2) described above, wherein
   the 3D model editing unit generates a projected image obtained by projecting the edited 3D model, and replaces an original image from which the 3D model is created with the updated image generated by merge processing of the original image and the projected image, thereby updating the original image to the updated image.
(4) The information processing device according to (3) described above, wherein
   the 3D model editing unit edits the 3D model using an editing object created in the virtual space.
(5) The information processing device according to (4) described above, wherein
   the merge processing includes at least merging an image in a region other than the editing target region in the original image and an image of the editing object in the projected image.
(6) The information processing device according to (4) or (5) described above, wherein
   the merge processing includes correcting, based on the original image, a shape and/or lighting of the editing object in the projected image.
(7) The information processing device according to any of (3) to (6) described above, wherein
   the merge processing includes aligning the projected image with reference to the original image.
(8) The information processing device according to any of (3) to (7) described above, wherein
   the 3D map includes the 3D model, the original image, and information acquired from the 3D model based on the original image.
(9) The information processing device according to (8) described above, wherein
   the information includes information of an entirety or part of an image encoded to establish inter-image correspondence, a three-dimensional measurement result related to the image, and a position and an orientation of an imaging device when the original image is captured.
(10) The information processing device according to any of (3) to (9) described above, wherein
   the 3D model editing unit is constituted by a generative AI.
(11) The information processing device according to any of (4) to (10) described above, wherein
   the 3D model editing unit identifies the editing target region and the editing object, and edits the 3D model.
(12) The information processing device according to any of (4) to (11) described above, further including:
   an object creation unit configured to create the editing object.
(13) The information processing device according to any of (2) to (12) described above, wherein
   the 3D model editing unit re-edits the 3D model using a plurality of the updated images.
(14) The information processing device according to any of (2) to (13) described above, wherein
   the 3D model editing unit further updates the updated image using a captured image captured in a real space and the updated image.
(15) An information processing method including:
   editing, by an information processing device, an editing target region in a 3D model in a virtual space; and
   updating, by the information processing device, a 3D map based on the 3D model in which the editing target region is edited.
(16) A program for causing a computer to function as:
   a 3D model editing unit configured to edit an editing target region in a 3D model in a virtual space; and
   a map update unit configured to update a 3D map based on the 3D model in which the editing target region is edited.

### Reference Signs List

1 VPS map DB, 11 AR providing system, 21 Data acquisition device, 22 VPS server, 23 AR server, 24 User terminal, 25 Network, 31 Liquid crystal display panel, 22 Backlight, 31 Imaging unit, 32 Display unit, 33 Communication unit, 41 Communication unit, 42 CPU, 43 Data storage unit, 44 Graphic display unit, 51 3D model map creation and editing unit, 52 3D model creation unit, 61 3D model map creation unit, 62 3D model map registration unit, 63 3D model map display unit, 64 3D model editing unit, 65 VPS map editing unit, 66 3D model DB, 71 3D object creation unit, 72 3D object registration unit, 73 3D object DB, 81 Image reception unit, 82 Association unit, 83 Device position and orientation estimation unit, 84 AR content orientation estimation unit, 85 AR content transmission unit, 86 AR content DB.

## Claims

1. An information processing device comprising:
a 3D model editing unit configured to edit an editing target region in a 3D model in a virtual space; and
a map update unit configured to update a 3D map based on the 3D model in which the editing target region is edited.

2. The information processing device according to claim 1, wherein
the map update unit updates the 3D map using the edited 3D model and an updated image updated based on the 3D model.

3. The information processing device according to claim 2, wherein
the 3D model editing unit generates a projected image obtained by projecting the edited 3D model, and replaces an original image from which the 3D model is created with the updated image generated by merge processing of the original image and the projected image, thereby updating the original image to the updated image.

4. The information processing device according to claim 3, wherein
the 3D model editing unit edits the 3D model using an editing object created in the virtual space.

5. The information processing device according to claim 4, wherein
the merge processing includes at least merging an image in a region other than the editing target region in the original image and an image of the editing object in the projected image.

6. The information processing device according to claim 4, wherein
the merge processing includes correcting, based on the original image, a shape and/or lighting of the editing object in the projected image.

7. The information processing device according to claim 3, wherein
the merge processing includes aligning the projected image with reference to the original image.

8. The information processing device according to claim 3, wherein
the 3D map includes the 3D model, the original image, and information acquired from the 3D model based on the original image.

9. The information processing device according to claim 8, wherein
the information includes information of an entirety or part of an image encoded to establish inter-image correspondence, a three-dimensional measurement result related to the image, and a position and an orientation of an imaging device when the original image is captured.

10. The information processing device according to claim 3, wherein
the 3D model editing unit is constituted by a generative AI.

11. The information processing device according to claim 4, wherein
the 3D model editing unit identifies the editing target region and the editing object, and edits the 3D model.

12. The information processing device according to claim 4, further comprising:
an object creation unit configured to create the editing object.

13. The information processing device according to claim 2, wherein
the 3D model editing unit re-edits the 3D model using a plurality of the updated images.

14. The information processing device according to claim 2, wherein
the 3D model editing unit further updates the updated image using a captured image captured in a real space and the updated image.

15. An information processing method comprising:
editing, by an information processing device, an editing target region in a 3D model in a virtual space; and
updating, by the information processing device, a 3D map based on the 3D model in which the editing target region is edited.

16. A program for causing a computer to function as:
a 3D model editing unit configured to edit an editing target region in a 3D model in a virtual space; and
a map update unit configured to update a 3D map based on the 3D model in which the editing target region is edited.
